# EUROPEAN PATENT APPLICATION

(11) **EP 2 727 450 A1**
(43) Date of publication of application: **07.05.2014**
(21) Application number: 13190736.2
(22) Date of filing: 29.10.2013
(51) Int. Cl.: A01D 34/73

(54) **Knife connector for quick-change knives on a disc mower**

(30) Priority: 02.11.2012 US 201213667887
(71) Applicant: CNH Industrial Belgium nv, 8210 Zedelgem (BE)
(72) Inventor: Fay, Jeffrey B. II, Lititz, PA Pennsylvania 17543 (US)
(74) Representative: CNH Industrial IP Department

(57) **Abstract**

A quick-release knife connector (20) for use on a rotary disc cutterhead (10) having a shaped knife nut (22) with a first portion providing a bearing surface (226) for an aperture (17) in the knife (16) and a second portion which inhibits axial movement of the knife (16) from contact with the first portion. A based capture element (13) normally retains the knife (16) in position on the first portion of the bearing surface (226). The second portion of the bearing surface (226) is provided to minimize axial movement of the knife (16) in the event of unintentional release of the capture element (13). The connector (20) is configured to allow installation and removal of knives (16) using simple tools for the task.

## Description

### BACKGROUND OF THE INVENTION

This invention relates generally to machines for severing standing crops from the ground using a plurality of rotatable discs having knives mounted thereon to sever standing crop by an impact action upon rotation of the discs and, more particularly, to an improved connector for attaching disc cutter knives to the machine that allows the knives to be easily removed from the rotatable discs and replaced.

Rotary disc cutterbars are well known in the agricultural arts and used in the harvest of a variety of standing crops. A typical disc cutterbar comprises a plurality of cutterheads spaced along the length of the cutterbar. The cutterheads each typically comprise a rotating cutting disc including diametrically opposed cutting blades (though configurations with three or more blades are known) driven by a drivetrain housed within the cutterbar that receives motive power from the prime mover to which the disc mower is attached. For background information on the structure and operation of some typical disc cutterbars, reference is made to US Patent 5,996,323, issued to Campbell, the descriptive portions thereof being incorporated herein in full by reference.

Cutterbars frequently impact rocks and other obstructions in a field which can damage the knives. Further, knives also become dulled by their interaction with the crop and require periodic removal for sharpening or replacement. Knife retention is traditionally accomplished through the use of threaded fasteners which require multiple components and involve time-consuming processes to remove and replace damaged or worn knives. Quick-change knife attachment systems are known wherein the knife is retained by a pin that is held in position by a spring which reduce the part count for the knife connection mechanism. Operating history of spring-actuated quick-change knife attachment systems has shown that knives may be inadvertently released from the rotating cutting discs during operation, especially when the knives strike obstacles such as stones, limbs, or the ground. Significant risk of injury and damage may result from inadvertantly released knives as the cutterheads spin at up to 3,000 rpm.

It would be advantageous to provide a locking mechanism for a quick-change knife attachment system that would prevent inadvertent knife release while continuing to offer a convenient manner to quickly remove and replace a cutterhead knife. Additional advantages would be realized by a locking mechanism that adds no loose parts to the cutterhead to reduce the chance that sub components might be misplaced during knife changes or become projectiles if dislodged from the cutterhead.

### SUMMARY OF THE INVENTION

Accordingly, the present invention, in any of the embodiments described herein, may provide one or more of the following advantages:
It is an object of the present invention to provide a quick-release knife connector for use on a rotary disc cutterhead allows the knife to be easily removed and reinstalled yet includes a secure locking mechanism to prevent inadvertent knife release.
It is a further object of the present invention to provide a quick-change knife connector for use on a rotary disc cutterhead which relies on a spring element to retain the knife in position on a bearing surface and a flange portion on the bearing surface to minimize axial movement of the knife in the event of unintentional release of the spring element.
It is a further object of the present invention to provide a quick-change knife connector for use on a rotary disc cutterhead having a shaped knife nut with a first portion providing a bearing surface for an aperture in the knife and a second portion which inhibits axial movement of the knife from contact with the first portion.
It is a further object of the present invention to provide a quick-change knife connector for use on a rotary disc cutterhead having a shaped knife nut for attaching a knife, the nut being bolted directly to the rotary disc cutterhead.
It is a still further object of the present invention to provide a specially shaped knife nut for a quick-change knife connector on a rotary disc cutterhead that allows installation and removal of knives using simple tools for the task.
It is a still further object of the present invention to provide a specially shaped knife nut for a quick-change knife connector on a rotary disc cutterhead that is durable in construction, inexpensive of manufacture, carefree of maintenance, easily assembled, and simple and effective to use.

These and other objects are achieved in accordance with the instant invention by providing a quick-release knife connector for use on a rotary disc cutterhead having a shaped knife nut with a first portion providing a bearing surface for an aperture in the knife and a second portion which inhibits axial movement of the knife from contact with the first portion. A capture element normally retains the knife in position on the first portion of the bearing surface. The second portion of the bearing surface is provided to minimize axial movement of the knife in the event of unintentional release of the capture element. The connector is configured to allow allows installation and removal of knives using simple tools for the task.

### BRIEF DESCRIPTION OF THE DRAWINGS

The advantages of this invention will be apparent upon consideration of the following detailed disclosure of the invention, especially when taken in conjunction with the accompanying drawings wherein:
FIG. 1 is a partial side view of a rotary disc cutterhead of the type commonly used on an agricultural mower and on which the present invention is useful;
FIG. 2 is a partial side view of a cutterhead from the header of FIG. 1 showing one embodiment of a knife connection mechanism embodying the present invention shown positioned as it would be during normal cutterhead operation;
FIG. 3 is an alternate view of the knife connection mechanism of FIG. 2 shown positioned as it would be when the cutterhead is non-operational and the knife is being removed;
FIG. 4 is an exploded perspective view of the knife connection mechanism of FIG. 2;
FIG. 5 is a partial side view of a cutterhead from the header of FIG. 1 showing a second embodiment of the knife connection mechanism shown positioned as it would be during normal cutterhead operation; and
FIG. 6 is an exploded perspective view of the knife connection mechanism of FIG. 5.

### DESCRIPTION OF THE PREFERRED EMBODIMENT(S)

Many of the fastening, connection, processes and other means and components utilized in this invention are widely known and used in the field of the invention described, and their exact nature or type is not necessary for an understanding and use of the invention by a person skilled in the art, and they will not therefore be discussed in significant detail. Also, any reference herein to the terms "left" or "right" are used as a matter of mere convenience, and are determined by standing at the rear of the machine facing in its normal direction of travel. Likewise, "forward" and "rearward" are determined by the normal direction of travel. "Upward" and "downward" orientations are relative to the ground or operating surface as are any references to "horizontal" or "vertical" planes. Furthermore, the various components shown or described herein for any specific application of this invention can be varied or altered as anticipated by this invention and the practice of a specific application of any element may already be widely known or used in the art by persons skilled in the art and each will likewise not therefore be discussed in significant detail. When referring to the figures, like parts are numbered the same in all of the figures.

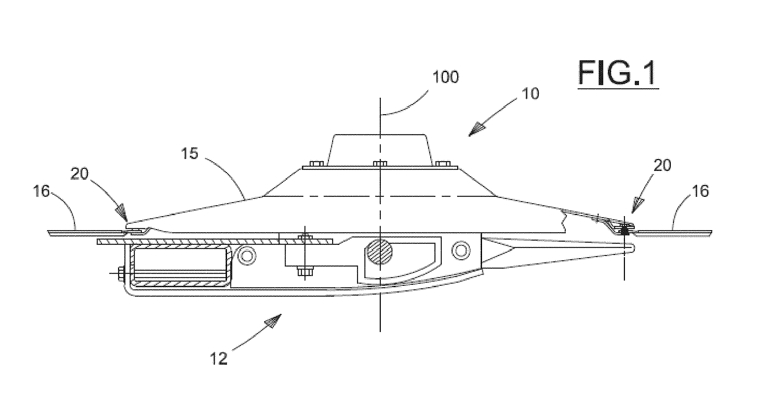

Referring now to the drawings and particularly to FIG. 1, a rotary disc cutterhead 10 is shown comprising a lower housing 12, a rotating disc element 15 driven for rotation about an upstanding axis 100 by a gear train generally enclosed in the housing 12, and a plurality of knives 16 attached to the periphery of the rotating disc element for rotation therewith. Knives 16 are attached to the rotating disc element 15 by a knife connector 20.

Rotary disc cutterheads have been utilized in agricultural harvesting mowers for many years. A disc cutterbar comprises a plurality of transversely spaced rotary disc cutterheads 10 generally spanning the transverse width of the mower. For background information on the structure and operation of disc cutterbars, reference is made to U.S. Pat. No. 4,815,262, issued to Koch et al. and to U.S. Patent No. 5,996,323, issued to Campbell et al., the descriptive portions thereof being incorporated herein in full by reference.

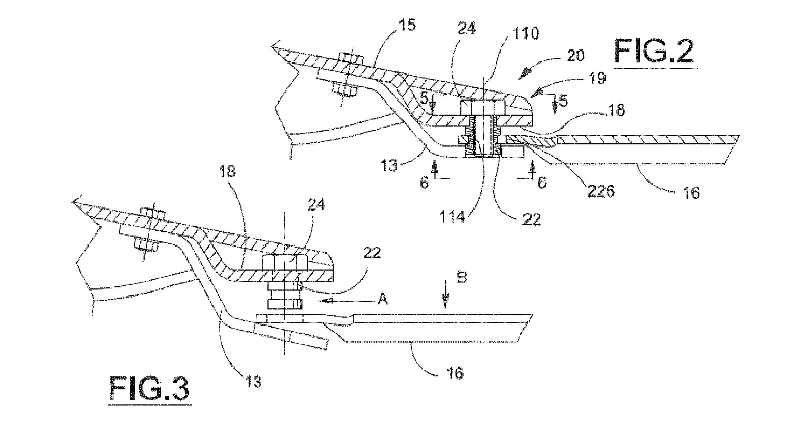

Now referring to FIGS. 2 and 3, the rotating disc element 15 further comprises a knife mounting boss 18 formed adjacent to the peripheral edge 19 of the rotating disc element 15 and a capture element 13. Mounting boss 18 and capture element 13 are connected to the disc element 15 for rotation therewith. A first embodiment of the knife connector 20 comprises a knife pivot bushing 22 connected to the mounting boss 18 by bolt 24. Bolt 24 and pivot bushing are aligned on knife pivot axis 110. One knife connector 20 is provided for each knife 16 that is connected to the rotating disc element 15, typically two knives that are symmetrically spaced apart around the disc element 15 periphery. The mounting boss 18 provides a generally horizontal portion of the disc element for attaching knife-connection hardware; the capture element 13 is biased toward a normal position (shown in FIG. 2) which prevents the knife 16 from being inadvertently disconnected from the knife connector 20. Flexing the capture element 13 downwardly exposes the distal end of the knife connector 20 which allows the knife 16 to be removed.

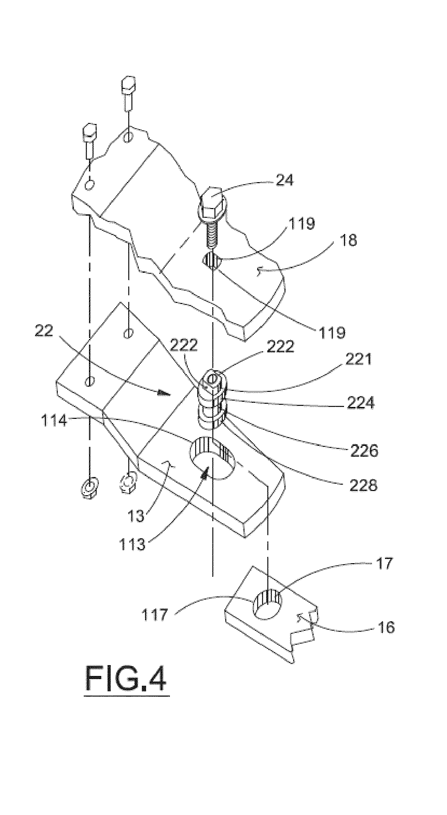

A first embodiment of the knife pivot bushing of the present invention is illustrated in FIGS. 2 through 4. Knife pivot bushing 22 comprises a shank portion 221 disposed at a proximal end of the bushing for positioning the bushing by engagement with bushing hole 118 in the mounting boss 18. Shank portion 221 preferably includes at least one flat 222 configured to align with an equal number of mating flats 119 in the bushing hole 118 to prevent rotation of bushing 22 when the shank 221 is engaged in the bushing hole 118. Fastener 24 fixes bushing 22 to the mounting boss 18 with flange surface 225 of base portion 224 in contact with the adjacent (bottom) surface of mounting boss 18. The axial extension of shank portion 221 from flange surface 225 is preferably less than the thickness of mounting boss 18 to enable bushing 22 to be fixedly connected to the mounting boss.

Knife pivot bushing 22 further comprises an axially distal retainer portion 228 and an axially intermediate knife bearing portion 226, each portion having a transaxial (perpendicular to the knife pivot axis 110) planar configuration allowing engagement with an attachment opening 17 in the knife. In the first embodiment, the preferred transaxial planar configurations are circular and both portions are accordingly generally cylindrical and symmetrically disposed on knife pivot axis 110.

The outer diameter of retainer portion 228 is slightly smaller than the mating opening 113 in capture structure 13 to enable the retainer portion 228 to partially extend through mating opening 113 when the capture structure 13 is in its normal, undeflected position (see FIG. 2). The outer diameter of retainer portion 228 is also slightly smaller than the attachment opening 17 in knife 16 to allow the knife 16 to be engaged on the pivot bushing 22. In the embodiment shown, the diameter of retainer portion is 22 millimeters and the diameter of attachment opening 17 is 23 millimeters. Bearing portion 226 is axially positioned between base portion 224 and retainer portion 228 and has an outside diameter smaller than the diameter of either base portion 224 or retainer portion 228. In the embodiment shown, the diameter of bearing portion 226 is 18 millimeters. Bearing portion 226 extends axially for a distance at least exceeding the thickness of knife 16 in the area surrounding attachment opening 17. Attachment opening 17 is axially aligned with bearing portion 226 when the knife 16 is operably installed. Centrifugal force of cutterhead rotation causes the knife 16 to move outwardly until the inward portion 117 of attachment opening 17 contacts the bearing portion 226, effectively offsetting the centerline of attachment opening 17 outwardly relative to the knife pivot axis 110. Axial movement of the knife 16 is then limited by contact with the inwardly facing surfaces of retainer portion 228 and base portion 224 as long as the cutterhead rotates, keeping the inward portion 117 of the knife attachment opening 17 in contact with the second portion 226. In the event that the capture structure 13 is inadvertently deflected downwardly, axial movement along pivot axis 110 will remain limited by contact with the base and retainer portions 224, 228, respectively, minimizing the risk of the knife becoming disconnected from the pivot bushing 22.

The arrangement of the capture structure 13 and the pivot bushing 22 when the capture structure is normally positioned prevents the knife 16 from moving axially downwardly to disengage the pivot bushing 22 and further reduces the likelihood of a knife 16 becoming disengaged from the pivot bushing 22 whether or not the cutterhead is rotating. Removal of the knife 16 is shown in FIG. 3 wherein the knife is first moved radially inwardly (arrow A) to center attachment opening 17 on pivot axis 110, and then downwardly (arrow B), after deflecting the capture structure 13 downwardly, to disengage the knife 16 from the pivot bushing 22. Once the attachment opening 17 is no longer engaged on pivot bushing 22, the knife 16 may be removed from the cutterhead. It is also noted that mating opening 113 in capture structure 13 is preferably a slightly elongated slot to allow clearance of the end of first portion 228 as the capture structure 13 is deflected downwardly, causing the mating opening 113 to move in a slight arc. In the embodiment illustrated, the mating opening is a rounded slot 25 millimeters wide and 30 millimeters long.

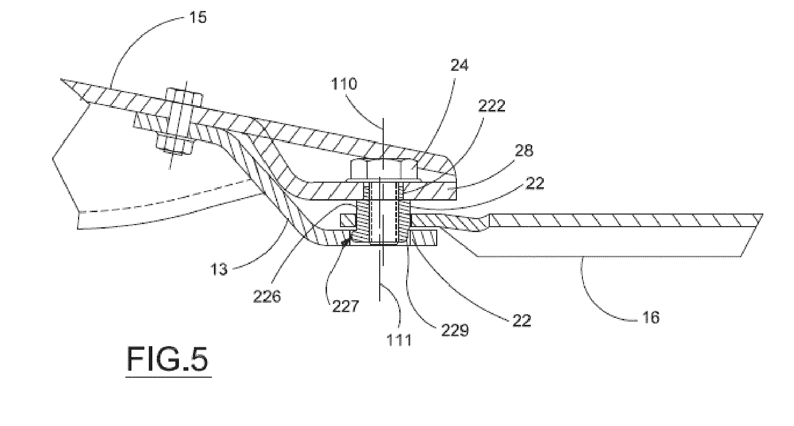

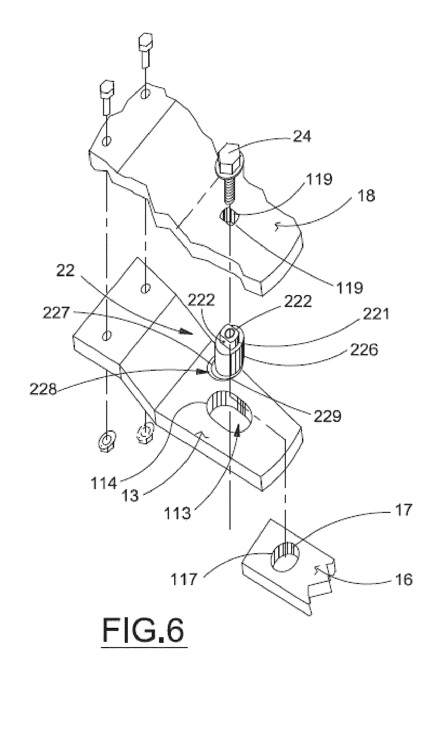

Referring finally to FIGS. 5 and 6, a second embodiment of the knife pivot bushing of the present invention is illustrated. In this embodiment, bearing portion 226 extends axially from the point of contact with mounting boss 18 to the juncture with retainer portion 228. Bearing portion 226 is generally cylindrical and symmetrically disposed on knife pivot axis 110 for its length, having an outer diameter slightly smaller than the attachment opening 17 in knife 16 to allow the knife 16 to be engaged on the bearing portion 226 with less clearance than in the previously described embodiment. Retainer portion 228 is distally disposed from the shank portion 221. The transaxial planar configuration of retainer portion 228 is generally symmetrical about a retainer axis 111 which is parallel to and offset from knife pivot axis 110 so that a lip portion 227 of the retainer portion circumference projects beyond the circumference of bearing portion 226, creating a small lip-like projection inwardly oriented toward the center of rotation of the upstanding cutterhead axis 100. In the embodiment shown, retainer portion 228 is a generally cylindrical structure having its retainer axis (axial centerline) 111 inwardly offset by 2.5 millimeters from the knife pivot axis 110 which creates a 2.5 millimeter projection of lip portion 227 from the circumference of bearing portion 226. Attachment opening 17 is axially aligned with bearing portion 226 when the knife 16 is operably installed. Centrifugal force of cutterhead rotation forces the knife 16 radially outwardly to maintain the inward portion 117 of attachment opening 17 in contact with bearing portion 226. Axial movement of the knife 16 is then limited by contact with the inwardly facing surfaces of the mounting boss 18 and the inwardly projecting lip portion 227 of retainer portion 228. In the event that the capture structure 13 is inadvertently deflected downwardly, axial movement along pivot axis 110 will remain limited by contact with the first portion 228, minimizing the risk of the knife becoming disconnected from the pivot bushing 22.

Removal of the knife 16 is similar to that described previously except that the knife 16 must first be moved downwardly into contact with retainer portion 228 and then the distal end of the knife angled downwardly to allow the attachment opening 17 to disengage outward portion 229 of retainer portion 228 before the knife is moved radially inwardly to clear the inwardly facing portion of retainer portion 228 thereby fully disengaging the pivot bushing 22.

Naturally, the invention is not limited to the foregoing embodiments, but it can also be modified in many ways without departing from the basic concepts. It will be understood that changes in the details, materials, steps and arrangements of parts which have been described and illustrated to explain the nature of the invention will occur to and may be made by those skilled in the art upon a reading of this disclosure within the principles and scope of the invention. The foregoing description illustrates the preferred embodiment of the invention; however, concepts, as based upon the description, may be employed in other embodiments without departing from the scope of the invention.

## Claims

1. A rotatatable disc element (15) for use on a disc cutterbar for an agricultural mower, the rotatable disc comprising at least one connector (20) for removably attaching a knife (16) to a mounting boss (18) of the rotatatable disc element (15), the knife (16) having an attachment opening (17) for engaging said connector (20), said connector comprising:
a proximal end, a generally opposing distal end, and a pivot axis (110) extending therebetween;
a shank portion (221) disposed adjacent said proximal end and configured for attachment to the mounting boss (18) for rotation therewith;
a bearing portion (226) disposed on said pivot axis (110) axially adjacent to and integral with said shank portion, said bearing portion having a first transaxial planar configuration of a size and shape enabling said bearing portion to pass through said attachment opening (17) in the knife (16);
a retainer portion (228) disposed on said pivot axis (110) adjacent said distal end axially adjacent to and integral with said bearing portion (226), said retainer portion (228) having a second transaxial planar configuration of a size and shape enabling said retainer portion (228) to pass through said attachment opening (17) in said knife (16), said second transaxial planar configuration being disposed relative to said first transaxial planar configuration such that the knife (16), upon having said attachment opening (17) engaged on said bearing portion (226) and being rotated by the rotatable disc (15) will be inhibited from axial movement toward said retainer portion (228) by contact with said second planar configuration; and
a capture structure (13) connected to the rotatable disc element (15) and moveable between retention and release positions, said capture structure (13) being biased toward said retention position and having an aperture (113) for receiving at least a portion of said retainer portion (228) when in said retention position thereby preventing disengagement of the knife attachment opening (17) from said connector (20) when the rotatable disc (15) is not rotating and the capture structure (13) is in the retention position.

2. The rotatatable disc element (15) of Claim 1, wherein said first transaxial planar configuration is generally circular having a first diameter.

3. The rotatatable disc element (15) of Claim 2, wherein said second transaxial planar configuration is generally circular having a second diameter greater than said first diameter.

4. The rotatatable disc element (15) of Claim 3, wherein said bearing portion (226) further comprises a generally cylindrical base portion (224) disposed adjacent to said shank portion (221) and having a diameter greater than said first diameter.

5. The rotatatable disc element (15) of Claim 2, wherein said second transaxial planar configuration is transaxially offset from said pivot axis (110).

6. The rotatatable disc element (15) of Claim 5, wherein said second transaxial planar configuration is circular.

7. The rotatatable disc element (15) of Claim 1, wherein said shank portion (221) engages the mounting boss (18) with a torque-resistant connection configured to prevent rotation of said connector relative to the mounting boss (18) when operably connected thereto.

8. The connector of Claim 1, wherein movement of said capture structure (13) to said flexed position enables said knife attachment opening (17) to be disengaged from said connector (20) adjacent said distal end.
